# FASCICULE DE BREVET EUROPEEN

(11) **EP 3 071 855 B1**
(45) Date de publication et mention de la délivrance du brevet: **03.01.2018**
(21) Numéro de dépôt: 14798779.6
(22) Date de dépôt: 10.11.2014
(51) Int. Cl.: F16D 51/18, F16D 51/48, F16D 51/24, F16D 51/50, F16D 121/02, F16D 121/14, F16D 121/24, F16D 125/40, F16D 125/48, F16D 125/52, F16D 125/60, F16D 125/68, F16D 123/00

(54) **FREIN À TAMBOUR FONCTIONNANT EN MODE SIMPLEX ET/OU EN MODE DUO SERVO**
TROMMELBREMSE IN SIMPLEX-MODUS UND/ODER IM SERVO-DUAL-MODUS
DRUM BRAKE OPERATING IN SIMPLEX MODE AND/OR IN SERVO-DUAL MODE

(30) Priorité: 19.11.2013 FR 1361342
(43) Date de publication de la demande: 28.09.2016
(73) Titulaire: Chassis Brakes International B.V., 5656 AG Eindhoven (NL)
(72) Inventeur: MOLINARO, Alberto, F-93160 Noisy Le Grand, (FR); DUPAS, Christophe, F-91120 Palaiseau (FR); LUU, Gérard, F-93160 Noisy Le Grand (FR); GUIGNON, Cédric, F-94510 LA QUEUE EN BRIE (FR)
(74) Mandataire: Brevalex
(86) Numéro de dépôt international: PCT/EP2014/074159
(87) Numéro de publication internationale: WO 2015/074907

(56) Documents cités:
- DE-A1-102006 009 089
- US-A- 4 369 863
- US-A- 5 275 260

## Description

### DOMAINE TECHNIQUE DE L'INVENTION

L'invention se rapporte à un frein à tambour de véhicule automobile comportant deux segments opposés de freinage, un élément d'ancrage qui est interposé transversalement entre des extrémités en vis-à-vis des segments de freinage et un cylindre de roue qui est apte à écarter transversalement les deux extrémités opposées des segments de freinage.

### ARRIERE PLAN TECHNIQUE DE L'INVENTION

L'invention se rapporte plus particulièrement à un frein à tambour de véhicule automobile qui comporte :
- un plateau transversal fixe ;
- un tambour qui est monté à rotation par rapport au plateau et qui est muni d'une jupe périphérique de friction ;
- deux segments opposés de freinage qui comportent des premières extrémités transversalement en vis-à-vis et des deuxièmes extrémités opposées transversalement en vis-à-vis ;
- un élément d'ancrage qui est interposé transversalement entre les deuxièmes extrémités des segments de freinage de manière que chaque deuxième extrémité soit contrainte élastiquement en appui transversal pivotant contre une face associée d'appui de l'élément d'ancrage ;
- un cylindre de roue qui, dans un premier mode de fonctionnement dit "simplex" du frein à tambour, est apte à écarter transversalement les deux premières extrémités adjacentes des segments de freinage, faisant pivoter les segments de freinage autour de leur face d'appui fixe par rapport au plateau, pour appliquer une face de friction de chaque segment de freinage contre la jupe de friction.

On connaît déjà des freins à tambour de ce type, aussi appelés "frein à tambour à segments flottants" car les segments prennent appui sur l'élément d'ancrage sans y être fixés. Ceci permet un centrage automatique des segments lorsqu'ils sont appliqués contre la jupe périphérique de friction du tambour.

Les freins à tambour sont classiquement utilisés alternativement en tant que frein de service, et en tant que frein de stationnement.

Lors d'une utilisation en tant que frein de service, le frein à tambour permet de ralentir voire immobiliser le véhicule. Lors de cet usage, le conducteur commande l'intensité du couple de freinage appliqué par le frein à tambour par l'intermédiaire d'un premier organe de commande tel qu'une pédale de frein.

Lors d'une utilisation en tant que frein de stationnement, le frein à tambour est utilisé pour immobiliser le véhicule à l'arrêt. Le frein à tambour est alors commandé en "tout ou rien" de manière à appliquer un couple de freinage puissant sur la roue du véhicule. Lors de cet usage, le conducteur commande généralement le frein à tambour au moyen d'un deuxième organe de commande, par exemple au moyen d'un frein à main qui tire un câble de frein.

Ce type de frein à tambour est satisfaisant pour un usage de frein de service car il permet de répartir l'usure sur toute la surface des garnitures de friction. Néanmoins, on a constaté que le couple de freinage pouvait être insuffisant pour une utilisation en tant que frein de stationnement.

Le document US 4,369,863 A montre un frein à tambour d'après le préambule de la revendication 1.

### BREF RESUME DE L'INVENTION

L'invention propose un frein à tambour du type décrit précédemment, caractérisé en ce que l'élément d'ancrage comporte :
- un corps fixe par rapport au plateau ;
- deux pistons dont chacun porte une face d'appui associée et qui sont montés coulissant transversalement dans le corps,
- des moyens commandés d'écartement transversal des faces d'appui entre une position d'ancrage dans laquelle les pistons sont serrés simultanément contre une face de butée associée du corps par les segments associés pour permettre le fonctionnement en mode "simplex" du frein à tambour, le corps formant entretoise fixe, et une position coulissante dans laquelle les faces d'appui sont écartées l'une de l'autre, les moyens d'écartement agissant comme une entretoise coulissante pour permettre le coulissement solidaire et libre des pistons d'appui par rapport au corps fixe lors d'un fonctionnement en mode dit "duo servo" du frein à tambour.

Selon d'autres caractéristiques de l'invention :
- l'écartement des deux faces d'appui en position coulissante est suffisant pour permettre le serrage des deux segments de freinage contre la jupe de friction ;
- les moyens d'écartement comportent un levier qui comporte une première extrémité d'actionnement et une deuxième extrémité d'articulation, le levier prenant appui transversalement par un tronçon intermédiaire sur un pivot qui est solidaire en coulissement avec le premier piston de l'élément d'ancrage, la deuxième extrémité du levier étant articulée avec une première extrémité d'une bielle, la deuxième extrémité de la bielle étant susceptible de solliciter transversalement le deuxième piston, le levier étant commandé en pivotement entre :
   -- une position inactive dans laquelle la bielle est inclinée par rapport à la direction transversale de manière que les deux faces d'appui occupent leur position d'ancrage ;
   -- une position active dans laquelle le levier prend transversalement appui sur le premier piston pour solliciter le deuxième piston en pivotant la bielle vers la direction transversale afin d'écarter les deux faces d'appui vers leur position coulissante ;
- en position coulissante des faces d'appui, l'axe principal de la bielle est orienté sensiblement transversalement ;
- l'extrémité d'actionnement du levier est susceptible d'être tirée vers sa position active par l'intermédiaire d'un câble de frein comportant une extrémité d'accrochage sur le levier et une extrémité de traction sur laquelle une force d'actionnement est appliquée ;
- les moyens d'écartement comportent un mécanisme vis-écrou qui permet de commander l'écartement transversal entre les deux faces d'appui par la rotation relative de la vis par rapport à l'écrou qui exerce une force d'actionnement sur le deuxième piston ;
- la rotation de l'écrou ou de la vis est commandée par un moteur électrique ;
- la rotation de l'écrou ou de la vis est commandée par l'intermédiaire d'une vis sans fin qui est munie d'une cannelure hélicoïdale et qui est entraînée par le moteur électrique, la vis sans fin étant engrenée avec la denture d'un pignon solidaire en rotation avec l'écrou ou la vis, l'axe de rotation de la vis sans fin étant agencé de manière à permettre un coulissement transversal du pignon par rapport à la vis sans fin tout en maintenant leur engrènement relatif ;
- le moteur électrique entraîne la rotation de l'écrou ou de la vis par l'intermédiaire d'au moins une roue dentée qui est engrenée avec la denture d'un pignon porté par l'écrou ou la vis ;
- les moyens d'écartement comportent un coin qui est monté coulissant orthogonalement à la direction transversale entre une position rétractée dans laquelle les deux faces d'appui occupent leur position d'ancrage, et une position actionnée dans laquelle les deux faces d'appui occupent leur position coulissante et vers laquelle il est tiré par un effort d'actionnement, le coin étant intercalé transversalement entre les deux pistons et le coin étant monté coulissant transversalement de manière solidaire avec les faces d'appui ;
- le frein à tambour comporte un organe élastique de raideur déterminée qui est interposé dans la chaîne de transmission de la force d'actionnement jusqu'à l'un des deux pistons ;
- l'organe élastique est interposé entre deux brins distincts du câble de frein ;
- l'organe élastique est interposé entre la portion intermédiaire du levier et l'un des deux pistons ;
- l'organe élastique est interposé entre :
   -- la vis ou l'écrou, et
   -- le premier piston ou le deuxième piston.

L'invention propose aussi un procédé de mise en oeuvre du frein à tambour réalisé selon les enseignements de l'invention, caractérisé en ce que lors de l'utilisation du frein à tambour en mode "duo servo", le cylindre de roue est inactif, seul les moyens d'écartement étant actionnés pour appliquer les segments de frein contre la jupe du tambour.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de face avec arrachement du tambour qui représente un frein à tambour réalisé selon les enseignements de l'invention ;
- la figure 2 est une vue en coupe selon le plan de coupe 2-2 de la figure 1 qui représente des moyens d'écartement des faces d'appui des segments du frein à tambour réalisé selon un premier mode de réalisation de l'invention, les faces d'appui occupant une première position d'ancrage ;
- la figure 3 est une vue similaire à celle de la figure 2 dans laquelle la face d'appui du premier segment de freinage est en cours d'écartement ;
- la figure 4 est une vue similaire à celle de la figure 2 dans laquelle la face d'appui du deuxième segment de freinage est en cours d'écartement, la face d'appui du premier segment de freinage étant déjà écartée ;
- la figure 5 est une vue similaire à celle de la figure 2 dans laquelle les segments de freinage sont tous les deux comprimés pour bloquer la rotation du tambour ;
- la figure 6 est une vue en coupe qui représente une variante de réalisation des moyens d'écartement selon le premier mode de réalisation, dans laquelle des rondelles élastiques sont intercalées entre le premier piston et le levier ;
- la figure 7 est une vue schématique selon le plan de coupe 2-2 qui représente un deuxième mode de réalisation des moyens d'écartement mettant en oeuvre un mécanisme vis-écrou ;
- la figure 8 est une vue de dessus de la figure 7 qui permet de constater l'inclinaison de l'axe d'une vis sans de commande du mécanisme vis-écrou par rapport à l'axe de rotation d'un pignon de commande du mécanisme vis-écrou ;
- la figure 9 est une vue en perspective qui représente un troisième mode de réalisation de l'invention mettant en oeuvre un mécanisme vis-écrou similaire à celui de la figure 7 et dans lequel la commande du mécanisme vis-écrou est réalisé par une roue dentée entraînée par un moteur ;
- la figure 10 est une vue schématique similaire à celle de la figure 7 qui représente un quatrième mode de réalisation des moyens d'écartement mettant en oeuvre un coin coulissant.

### DESCRIPTION DETAILLEE DES FIGURES

Dans la suite de la description, on adoptera à titre non limitatif des orientations longitudinale, verticale et transversale indiquées par le trièdre "L,V,T" des figures. L'orientation longitudinale "L" est dirigée d'arrière en avant.

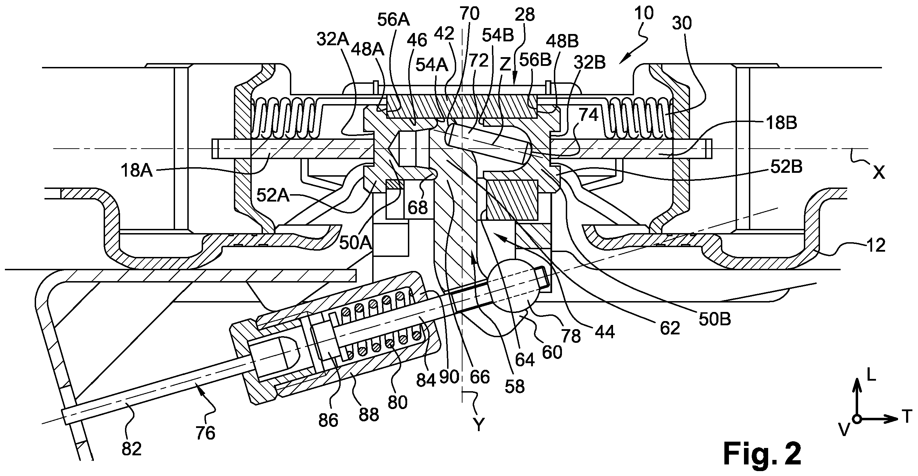

Dans la suite de la description, en référence aux figures 2 à 9, la direction transversale sera dirigée, les termes "intérieur" et "extérieur" seront utilisés pour orienter la direction transversale depuis l'intérieur de l'alésage 46 de l'élément 28 d'ancrage, vers l'extérieur dudit alésage 46, dans les deux sens.

Dans la suite de la description, des éléments présentant une structure identique ou des fonctions analogues seront désignés par une même référence.

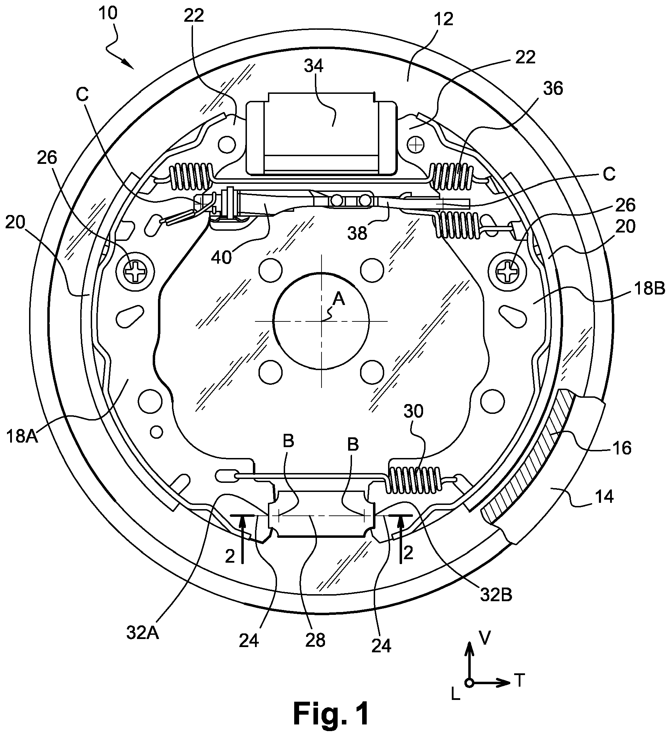

On a représenté à la figure 1 un frein 10 à tambour qui est destiné à être monté sur une roue (non représentée) de véhicule automobile montée tournante autour d'un axe "A" longitudinal de rotation. Il s'agit d'un frein 10 à tambour qui est susceptible d'être utilisé alternativement en tant que frein de service et en tant que frein de stationnement.

Le frein 10 à tambour comporte un plateau 12 qui est monté fixe par rapport au châssis du véhicule automobile. Le plateau 12 s'étend dans un plan globalement transversal par rapport à l'axe "A" de la roue.

Le frein 10 à tambour comporte aussi un tambour 14 dont une partie seulement a été représentée à la figure 1 et qui est susceptible de porter une roue (non représentée) associée. Le tambour 14 comporte une jupe 16 annulaire cylindrique dont la face interne forme une piste de friction. La jupe 16 s'étend longitudinalement vers l'avant depuis une face avant du plateau 12 et elle est montée coaxiale avec l'axe "A" de la roue. Le tambour 14 est ainsi monté à rotation par rapport au plateau 12.

Un premier segment 18A de freinage et un deuxième segment 18B de freinage sont montés sur le plateau 12. Le premier segment 18A de freinage est agencé à gauche à la figure 1, tandis que le deuxième segment 18B de freinage est agencé à droite.

Les deux segments 18A, 18B de freinage présentent ici une structure et un agencement identiques par symétrie par rapport à un plan vertical longitudinal passant par l'axe "A" de rotation. Seul le premier segment 18A de freinage sera donc décrit par la suite.

Le premier segment 18A de freinage s'étend globalement verticalement à l'intérieur du tambour 14. Le premier segment 18A de freinage présente une courbure centrée sur l'axe "A" de rotation, qui correspond à celle de la jupe 16. Le premier segment 18A de freinage présente une face 20 de friction externe qui est tournée vers la piste de friction interne de la jupe 16. La face 20 de friction présente elle aussi une courbure correspondante à celle de la jupe 16 interne du tambour 14.

Le premier segment 18A de freinage comporte une première extrémité 22 supérieure et une deuxième extrémité 24 inférieure. Du fait de l'agencement symétrique des deux segments 18A, 18B de freinage, leurs premières extrémités 22 supérieures sont agencées transversalement en vis-à-vis et leurs deuxièmes extrémités 24 inférieures sont agencées transversalement en vis-à-vis.

Les segments 18A, 18B de freinage est monté flottant sur le plateau 22 par l'intermédiaire d'un ensemble 26 associé de maintien comportant un écrou et un ressort.

Un élément 28 d'ancrage est interposé transversalement entre les extrémités 24 inférieures des segments 18A, 18B. L'élément 28 d'ancrage est fixé au plateau 12. Un premier moyen 30 de rappel élastique, qui est ici formé par un ressort, est tendu entre les deux extrémités 24 inférieures des segments 18A, 18B de manière que l'extrémité 24 inférieure du premier segment 18A de freinage, respectivement du deuxième segment 18B de freinage, soit contrainte élastiquement en appui transversal pivotant contre une première face 32A d'appui, respectivement une deuxième face 32B d'appui, de l'élément 28 d'ancrage. Chaque face 32A, 32B d'appui s'étend dans un plan vertical longitudinal et elle est tournée vers le segment 18A, 18B associé.

Le frein 10 à tambour comporte aussi un cylindre 34 de roue hydraulique qui est interposé transversalement entre les extrémités 22 supérieures des segments 18A, 18B de freinage. Le cylindre 34 de roue est fixé au plateau 12. Il comporte deux pistons (non représentés) opposés qui sont montés coulissants transversalement dans une chambre hydraulique. Chaque piston est destiné à venir en appui transversal sur l'extrémité 22 supérieure du segment 18A, 18B associé de freinage.

Le cylindre 34 de roue est destiné à être actionné lors d'une utilisation du frein 10 à tambour dans un premier mode de fonctionnement dit "simplex" qui correspond par exemple à un usage en tant que frein de service.

Dans ce mode de fonctionnement, les faces 32A, 32B d'appui de l'élément 28 d'ancrage sont fixes par rapport au plateau 12. Chaque segment 18A, 18B est ainsi susceptible de pivoter par son extrémité 24 inférieure autour d'un point fixe définissant un axe "B" longitudinal de pivotement entre :
- une position inactive dans laquelle il est rappelé élastiquement vers l'axe "A" du tambour 14 avec un jeu radial déterminé par rapport à la jupe 16, et
- une position active dans laquelle la face 20 de friction est appliquée contre la face de friction de la jupe 16.

Les pistons du cylindre 34 de roue sont ainsi aptes à écarter transversalement les deux extrémités supérieures 22 adjacentes pour solliciter les segments 18A, 18B de freinage vers leur position active dès lors que la pression de fluide augmente dans la chambre hydraulique du cylindre 40 de roue.

Le rappel élastique des segments 28A, 28B de freinage vers leur position inactive est réalisé au moyen du premier moyen 30 de rappel élastique et au moyen d'un deuxième moyen 36 de rappel élastique, ici un ressort, qui est tendu transversalement entre les deux extrémités supérieures 22 des segments 18A, 18B de freinage.

En outre, dans leur position inactive, les deux segments 18A, 18B de freinage sont maintenus écartés l'un de l'autre par une biellette 38 qui s'étend transversalement entre deux portions supérieures des segments 18A, 18B de freinage. La biellette 38 est ici munie d'un mécanisme 40 de rattrapage des jeux d'usure qui permet de maintenir les segments 18A, 18B de freinage écartés d'un jeu radial constant par rapport au tambour 14 dans leur position inactive, quelle que soit l'usure des faces 20 de friction.

La biellette 38 est reçue en appui pivotant autour d'un axe longitudinal "C" sur chaque segment 18A, 18B de freinage.

Dans ce mode de fonctionnement "simplex", lorsque le tambour 14 tourne dans un sens antihoraire en se reportant à la figure 1, le premier segment 18A de freinage est serré par le cylindre 34 de roue contre la jupe 16. Du fait des frottements, la rotation du tambour 14 entraîne le premier segment 18A de freinage. Le premier segment 18A de freinage est alors comprimé circonférentiellement contre la première face 32A d'appui associée de l'élément 28 d'ancrage.

Simultanément, le deuxième segment 18B de freinage de gauche est au contraire entraîné par le tambour 14, du fait des frottements, circonférentiellement vers le cylindre 34 de roue. Le deuxième segment 18B de freinage tend donc à s'écarter de la deuxième face 32B d'appui associée.

Le premier segment 18A de freinage est ainsi dit "comprimé", tandis que le deuxième segment 18B de freinage est dit "tendu". Dans ce mode de fonctionnement "simplex", les segments 18A, 18B de freinage n'exercent aucun effort l'un sur l'autre.

Le frein 10 à tambour selon l'invention est destiné à fonctionner selon un deuxième mode dit "duo servo" dans lequel les deux segments 18A, 18B sont susceptibles d'être tous les deux comprimés lors de leur application contre la jupe 16 du tambour 14. Ce fonctionnement en mode "duo servo" est notamment destiné à une utilisation du frein 10 à tambour en tant que frein de stationnement car il permet d'obtenir un freinage puissant entraînant un blocage très rapide des roues du véhicule.

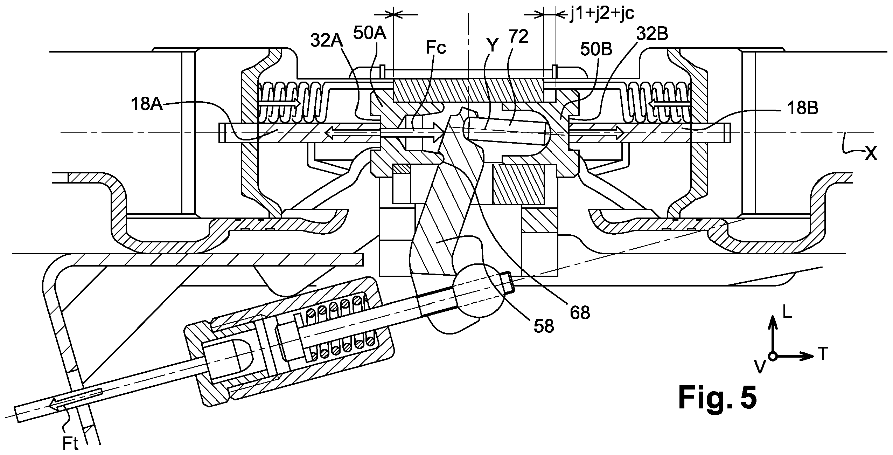

Pour réaliser un tel frein 10 à tambour, l'élément 28 d'ancrage comporte un corps 42 fixe par rapport au plateau 12. Le corps 42 fixe dans lequel chaque face 32A, 32B d'appui est montée coulissante transversalement. Des moyens 44 d'écartement transversal des faces 32A, 32B d'appui permettent de commander les faces 32A, 32B d'appui entre :
- une position d'ancrage dans laquelle les deux faces 32A, 32B d'appui enserrent transversalement le corps 42, comme représenté à la figure 2 ;
- une position coulissante dans laquelle les faces 32A, 32B d'appui sont écartées l'une de l'autre, comme représenté à la figure 5, dans laquelle les moyens 44 d'écartement agissent comme une entretoise coulissante pour permettre le coulissement solidaire et libre des faces 32A, 32B d'appui par rapport au corps 42 fixe lors d'un fonctionnement en mode "duo servo" du frein 10 à tambour.

On a représenté en détails aux figures 2 à 5 un premier mode de réalisation de l'élément 28 d'ancrage et des moyens 44 d'écartement.

Le corps 42 présente un alésage 46 cylindrique d'axe transversal qui débouche transversalement des deux côtés par deux ouvertures d'extrémité. Le pourtour de l'ouverture d'extrémité débouchant sur le premier segment 18A de freinage présente une première face 48A verticale longitudinale de butée, tandis que le pourtour de l'ouverture d'extrémité débouchant sur le deuxième segment 18B de freinage présente une deuxième face 48B verticale longitudinale de butée.

La première face 32A d'appui, respectivement la deuxième face 32B d'appui, est portée par un premier piston 50A, respectivement par un deuxième piston 50B, associé. Les pistons 50A, 50B sont montés coulissant transversalement en opposition dans l'alésage 46 le long d'un axe "X" transversal commun. Chaque piston 50A, 50B présente une queue transversale qui présente une section analogue à celle de l'alésage 46 pour son guidage en coulissement. Chaque queue de piston 50A, 50B est délimitée transversalement par une tête 52A, 52B d'extrémité extérieure libre qui est agencée à l'extérieur de l'alésage 46 et une face 54A, 54B intérieure opposée d'extrémité qui est agencée en transversalement en vis-à-vis de la face 54B, 54A intérieure de l'autre piston 50B, 50A.

La face extérieure de la tête 50A, 50B porte la face 32A, 32B d'appui du segment 18A, 18B de freinage associé. Pour éviter que le segment 18A, 18B ne s'échappe longitudinalement de la face 32A, 32B d'appui, chaque face 32A, 32B d'appui est ici formée par le fond d'une gorge verticale formée dans la face extérieure de la tête 50A, 50B.

Chaque tête 52A, 52B présente une section supérieure à celle de l'alésage 46. La face 56A, 56B longitudinale verticale de la tête 52A, 52B qui est tournée vers le corps 42 forme une face 56A, 56B d'arrêt qui est destinée à venir en contact avec la face 48A, 48B associée de butée du corps 42 pour arrêter le coulissement de chaque piston 50A, 50B vers l'autre piston 50B, 50A. Lorsque les deux pistons 50A, 50B sont en butée contre leur face 48A, 48B de butée respective, les faces 54A, 54B intérieures de chaque piston 50A, 50B sont écartées transversalement de manière à libérer un espace à l'intérieur de l'alésage 46, comme représenté à la figure 2.

Les deux pistons 50A, 50B sont rappelés élastiquement en butée contre leur face 48A, 48B de butée respectivement par le premier moyen 30 de rappel élastique, via les segments 18A, 18B de freinage.

Les moyens 44 d'écartement comportent un levier 58 qui s'étend globalement selon un axe "Y" longitudinal. Le levier 58 comporte une première extrémité 60 d'actionnement, qui est représentée en bas de la figure 2, et une deuxième extrémité 62 d'articulation, qui est représentée en haut de la figure 2. L'extrémité 62 d'articulation est agencée à l'intérieur de l'alésage 46, entre les deux pistons 50A, 50B, à la faveur d'un orifice 64 réalisé dans le plateau 12 et dans le corps 42. L'extrémité 60 d'actionnement est agencée longitudinalement derrière le plateau 12 fixe.

Le levier 58 prend appui transversalement par un tronçon 66 intermédiaire sur un pivot 68 qui est solidaire en coulissement avec la première face 32A d'appui. Dans l'exemple représenté à la figure 2, le pivot 68 est agencé sur la face 54A d'extrémité intérieure du premier piston 50A. Le pivot 68 est décalé vers l'extrémité arrière de la face 54A par rapport à l'axe "X" de coulissement des pistons 50A, 50B.

La deuxième extrémité 62 d'articulation du levier 58 est articulée avec une première extrémité 70 intérieure d'une bielle 72. La deuxième extrémité 74 extérieure de la bielle 72 étant susceptible de solliciter transversalement la deuxième face 32B d'appui. La bielle 72 présente un axe "Z" globalement transversal. La bielle 72 est ici formée par un doigt. Sa première extrémité 70 intérieure est reçue dans un logement du levier 58 pour former une rotule de manière à pivoter autour d'un premier axe vertical. De même, la deuxième extrémité 74 extérieure est reçue dans un logement de la face 54B d'extrémité intérieure du deuxième piston 50B pour former une rotule de manière à pivoter autour d'un deuxième axe vertical. La deuxième extrémité 74 est en contact avec le fond de son logement sensiblement au niveau de l'axe "X" de coulissement du deuxième piston 50B.

Le levier 58 est commandé en pivotement entre :
- une position inactive, comme représentée à la figure 2, vers laquelle il est rappelé élastiquement par les premiers moyens 30 de rappel élastique, et dans laquelle la bielle 72 est légèrement inclinée par rapport à l'axe "X" de coulissement de manière que les deux faces 32A, 32B d'appui des pistons 50A, 50B occupent leur position d'ancrage contre les faces 48A, 48B de butée ;
- une position active, comme représentée à la figure 5, dans laquelle le levier 58 prend transversalement appui sur le pivot 68 du premier piston 50A pour solliciter la deuxième face 32B d'appui en pivotant la bielle 72 vers la direction transversale afin d'écarter les deux faces 32A, 32B d'appui vers leur position coulissante.

En position inactive du levier 58, l'extrémité intérieure 70 de la bielle 72 est décalée longitudinalement en avant de l'axe "X" de coulissement. Ainsi, le pivot 68 et l'extrémité intérieure 70 de la bielle 72 sont agencés longitudinalement de part et d'autre de l'axe "X" de coulissement, tandis que l'extrémité extérieure 74 de la bielle 72 demeure sensiblement sur l'axe "X" de coulissement.

En position active du levier 58, l'axe "Y" principal de la bielle 72 est orienté sensiblement transversalement, de manière à procurer un écartement transversal maximal entre les deux faces 32A, 32B d'appui. Néanmoins, pour éviter un blocage du levier 58 dans sa position active, le pivotement de la bielle 72 est conçu pour s'arrêter légèrement avant d'atteindre la position strictement transversale.

Lorsque le levier 58 occupe sa position inactive, les deux faces 32A, 32B d'appui sont simultanément rappelées en butée contre les faces 48A, 48B de butée associées du corps 42 par les segments 18A, 18B associés pour permettre le fonctionnement en mode "simplex" du frein 10 à tambour. Le corps 42 de l'élément 28 d'ancrage forme ainsi une entretoise transversale fixe par rapport au plateau 12.

Lorsque le levier 58 occupe sa position active, les faces 32A, 32B d'appui sont écartées transversalement l'une de l'autre. Les faces 56A, 56B des pistons 50A, 50B sont écartées transversalement d'une distance supérieure à celle séparant les faces 48A, 48B de butée du corps 42. En outre, l'orifice 64 de passage du levier 58 est suffisamment grand pour permettre le coulissement transversal de l'ensemble formé par les deux pistons 50A, 50B, le levier 58 en position active et la bielle 72. Les moyens 44 d'écartement forment ainsi une entretoise coulissante susceptible de coulisser transversalement par rapport au plateau 12 et par rapport au corps 42. Cette position est utilisée pour un fonctionnement du frein 10 à tambour en mode "duo servo".

Le passage en mode "duo servo" peut être effectué lorsque le cylindre 34 de roue est inactif, mais aussi lorsque le cylindre 34 de roue est actif.

Dans le premier cas, le frein 10 à tambour est initialement inutilisé, le cylindre 34 de roue étant inactif. Les moyens 44 d'écartement permettent de commander à eux seuls le serrage des segments 18A, 18B de freinage. A cet effet, l'écartement des deux faces 32A, 32B d'appui en position coulissante est suffisant pour permettre le serrage des deux segments 18A, 18B de freinage contre la jupe 16 de friction par écartement des deux extrémités 24 inférieures des segments 18A, 18B.

Dans le deuxième cas, le cylindre 34 de roue est initialement dans son état actif. Chaque segment 18A, 18B occupe ainsi sa position active par écartement des deux extrémités 22 supérieures. Tout en maintenant le cylindre 34 de roue dans son état actif, le conducteur du véhicule active le frein de stationnement. Le mode "duo-servo" est donc enclenché, alors que le mode "simplex" est déjà activé. Les faces 32A, 32B d'appui sont commandées vers leur position coulissante par un effort d'actionnement déterminé exercé par le déplacement d'un organe de commande, par exemple un câble 76 de frein. Les segments 18A, 18B sont alors commandés vers leur position active simultanément par le cylindre 34 de roue et par les moyens 44 d'écartement.

Puis, le conducteur commande le cylindre 34 de roue vers son état inactif, seuls les moyens 44 d'écartement assurant alors le maintien des segments 18A, 18B dans leur position active.

Cependant, lorsque le cylindre 34 de roue est déjà actif, on a observé que les segments 18A, 18B s'opposaient à l'écartement des faces 32A, 32B d'appui vers leur position coulissante. Lorsque les extrémités 22 supérieures des segments 18A, 18B sont déjà écartées, il n'est en effet pas possible d'écarter leurs extrémités 24 inférieures par l'application de l'effort d'actionnement déterminé. L'effort d'actionnement des moyens 44 d'écartement est donc atteint alors que les pistons 50A, 50B ne sont pas suffisamment écartés pour maintenir à eux seuls les segments 18A, 18B dans leur état actif.

Or le déplacement de l'organe de commande des moyens 44 d'écartement est interrompu dès que l'effort d'actionnement déterminé est atteint. Il en résulte que lorsque le cylindre 34 de roue est désactivé, les extrémités 22 supérieure des segments 18A, 18B ne sont plus écartées, et leurs extrémités 24 inférieures sont insuffisamment écartées par les moyens 44 d'écartement. Il n'y a donc plus de freinage malgré le fait que le conducteur ait activé la fonction "duo servo".

Pour résoudre ce problème, un organe 80 élastique est interposé dans la chaîne de transmission de l'effort "Ft" d'actionnement jusqu'au premier piston 50A. Cet organe 80 élastique présente une raideur et une capacité de déformation adaptée pour accumuler l'énergie mécanique fournie par l'organe de commande lorsque le cylindre 34 de roue est actif. En d'autres termes, lorsque l'effort d'actionnement déterminé est insuffisant pour déplacer l'extrémité inférieure des segments 18A, 18B, l'organe 80 élastique se déforme pour accumuler de l'énergie mécanique.

Ainsi, lorsque le cylindre 34 de roue est désactivé, l'organe 80 élastique restitue l'énergie mécanique accumulée sous forme de l'effort d'actionnement déterminé en écartant les deux pistons 50A, 50B l'un de l'autre afin de maintenir constamment les segments 18A, 18B dans leur position active. La diminution d'écartement des extrémités 22 supérieures des segments 18A, 18B est alors compensée simultanément par l'augmentation d'écartement de leurs extrémités 24 inférieures provoquée par l'organe 80 élastique.

L'extrémité 60 d'actionnement du levier 58 est susceptible d'être tirée vers sa position active, à l'encontre de l'effort de rappel exercé par le ressort 30, par l'intermédiaire d'un câble 76 de frein. Le câble 76 comporte une extrémité 78 d'accrochage sur le levier 58 qui permet de tirer le levier 58 pour appuyer le levier 58 contre le pivot 68. L'effort d'actionnement du câble 76 de frein est appliqué à une extrémité opposée (non représentée) de traction pour solliciter le câble 76 de frein en traction.

On a constaté que lorsque les segments 18A, 18B de freinage sont appliqués contre la jupe 16 du tambour 14, le moindre déplacement du câble 76 de frein en traction fait augmenter de manière brutale l'effort exercé par les moyens 44 d'écartement sur les segments 18A, 18B de freinage. Cette caractéristique dénote une grande rigidité de la commande du frein 10 à tambour en mode "duo servo".

Pour assouplir la commande, il faut faire en sorte que le rapport entre l'effort appliqué par les segments 18A, 18B sur le tambour 14 et la course du câble 76 de frein en traction soit abaissé. Ceci est ici réalisé en interposant l'organe 80 élastique de raideur déterminée dans la chaîne de transmission de l'effort d'actionnement entre l'extrémité de traction du câble 76 de frein et le premier piston 50A.

Dans l'exemple représenté à la figure 2, le câble 76 de frein est divisé en un premier brin 82 portant l'extrémité de traction et un deuxième brin 84 portant l'extrémité 78 d'accrochage. L'organe 80 élastique est interposé entre deux brins 82, 84 distincts du câble 76 de frein. Les deux brins 82, 84 sont liés l'un à l'autre par une extrémité de liaison.

Une coupelle 86 radiale est fixée à extrémité de liaison du brin 84 d'accrochage. Cette coupelle 86 est montée coulissante selon l'axe du brin 84 d'accrochage dans un manchon 88 qui est fixé à l'extrémité de liaison du brin 82 de traction. L'extrémité libre du manchon 88 comporte un fond 90 d'extrémité axiale qui présente un orifice central de passage du brin 84 d'accrochage. L'organe 80 élastique est formé par un ressort de compression qui est interposé axialement entre la coupelle 86 du brin 84 d'accrochage et le fond 90 du manchon 88. Ainsi, lorsque la tension du câble 76 de frein, provoquée par l'effort d'actionnement, excède une valeur prédéterminée, l'organe 80 élastique commence à se comprimer, permettant ainsi d'augmenter la course de traction du brin 82 de traction tout en augmentant modérément l'effort de traction dans le brin 84 d'accrochage.

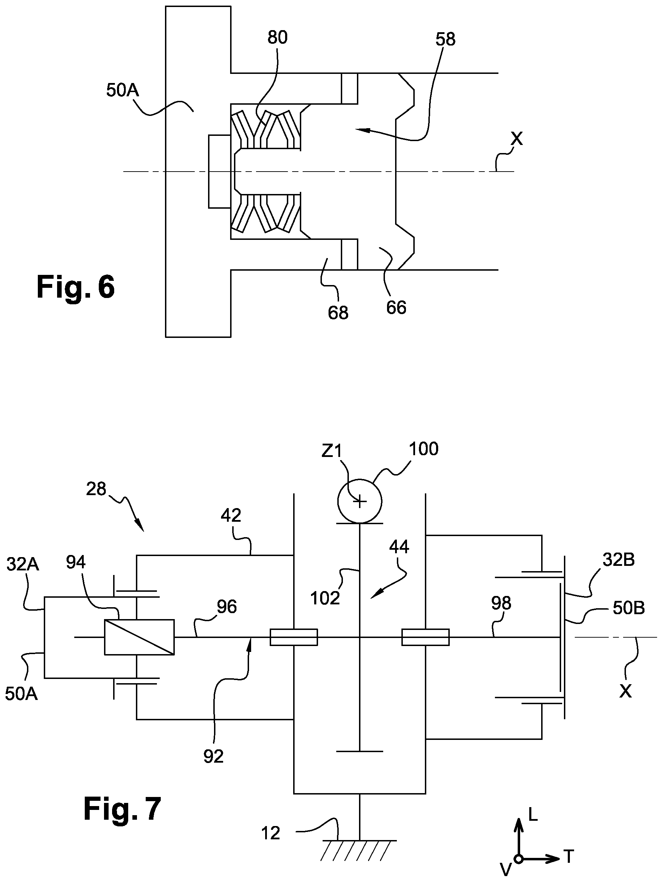

Selon une variante représentée à la figure 6, l'organe 80 élastique est formé par des rondelles élastiques de type "Belleville", qui sont interposées entre la portion 66 intermédiaire du levier 58 et le premier piston 50A.

On décrit à présent le fonctionnement du frein 10 à tambour en mode "simplex" en référence aux figures 1 et 2.

Dans ce mode de fonctionnement, le levier 58 demeure en position inactive. Ainsi, les pistons 50A, 50B occupent constamment leur position d'ancrage dans laquelle ils sont en butée contre leur face 48A, 48B de butée respective. Les faces 32A, 32B d'appui des segments 18A, 18B de freinage sont donc fixes tout au long du fonctionnement du frein 10 à tambour en mode "simplex", comme représenté à la figure 2.

Comme expliqué précédemment, les segments 18A, 18B de freinage sont poussés vers leur position active par le cylindre 34 de roue. Les segments 18A, 18B de freinage pivotent alors autour de leur point d'appui sur leur face 32A, 32B d'appui respective. Aucun effort n'est transmis d'un segment 18A, 18B de freinage à l'autre par l'élément 48 d'ancrage.

A la fin de l'opération de freinage en mode "simplex", les segments 18A, 18B de freinage sont rappelés élastiquement vers leur position inactive par les moyens 30, 36 de rappel élastiques.

On décrit à présent le fonctionnement du frein 10 à tambour en mode "duo servo" en référence aux figures 2 à 5.

Durant ce mode de fonctionnement, le cylindre 34 de roue demeure inactif. Au début de l'opération de freinage, les pistons 50A, 50B occupent leur position d'ancrage, et le levier 58 occupe sa position inactive comme représentée à la figure 2.

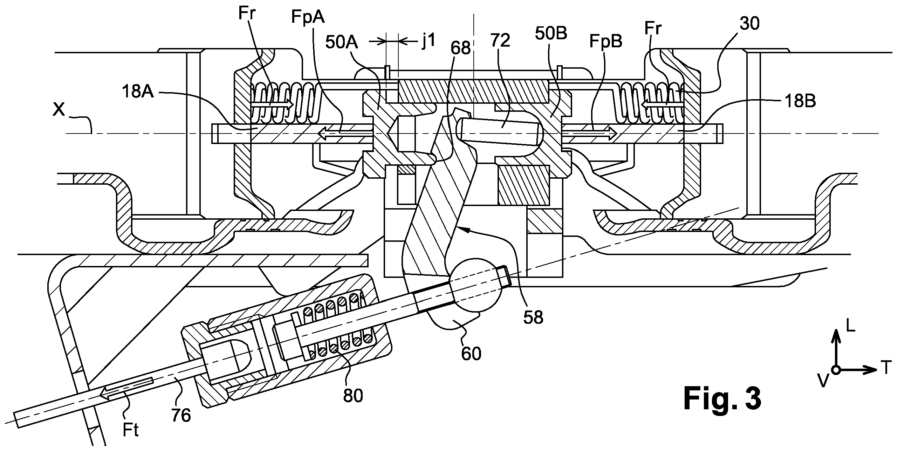

Puis, lors d'une première étape de déplacement du premier segment 18A de freinage illustrée à la figure 3, le câble 76 de frein est tiré avec un effort d'actionnement "Ft" de manière à solliciter l'extrémité 60 d'actionnement du levier 58. Le levier 58 pivote en prenant appui sur le pivot 68 du premier piston 50A. Ceci entraîne le pivotement de la bielle 72 vers sa position transversale. Au cours de ce pivotement, le levier 58 applique une première force transversale "FpA" sur le premier piston, et une deuxième force transversale "FpB" sur le deuxième piston 50B via la bielle 72. Ces deux forces "FpA" et "FpB" tendent à écarter les pistons 50A, 50B à l'encontre de l'effort "Fr" de rappel élastique exercé par les moyens 30 de rappel élastiques via les segments 18A, 18B de freinage.

Du fait de l'inclinaison de la bielle 72, la première force "Fp1" transversale présente une intensité supérieure à celle de la force "Fp2". Or, les forces "Fr" de rappel élastiques sont toutes deux égales. On observe donc un coulissement du premier piston 50A lorsque la première force "Fp1" compense la force "Fr" de rappel élastique, tandis que le deuxième piston 50B demeure immobile car la deuxième force "Fp2" est encore surpassée par la force "Fr" de rappel élastique.

Le premier piston 50A coulisse ainsi d'une course "j1", déplaçant ainsi le premier segment 18A de freinage en direction de la jupe 16 du tambour 14.

L'effort d'actionnement exercée dans le câble 76 de frein commence à comprimer l'organe 80 élastique. Durant cette étape, le câble 76 de frein est par exemple tiré de 2,35 mm pendant que le premier piston 50A coulisse de 0,6 mm.

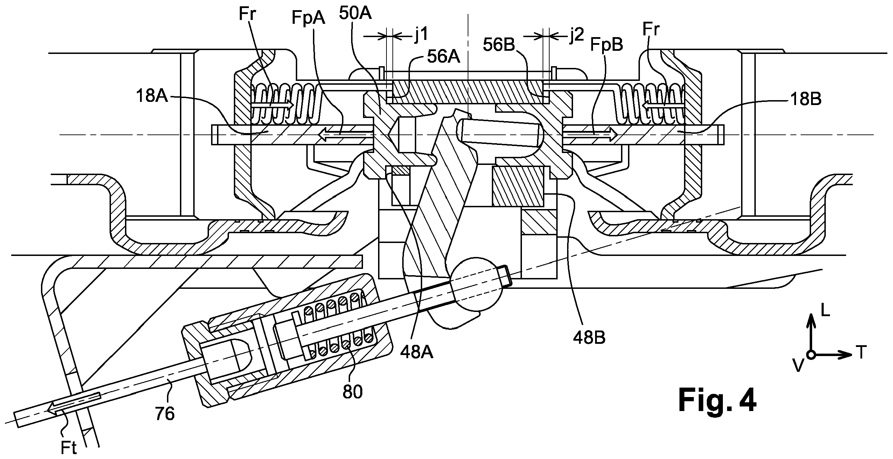

Lorsque le premier segment 18A de freinage est appuyé contre la jupe 16 du tambour 14, une deuxième étape de déplacement du deuxième segment 18B de freinage débute, comme illustré à la figure 4. Le premier segment 18A de freinage étant appuyé contre le tambour 14, le coulissement du premier piston 50A est arrêté.

Lors de cette deuxième étape, l'effort "Ft" d'actionnement dans le câble 76 de frein est intensifiée par réaction au contact entre le premier segment 18A de freinage et le tambour 14. Cet effort d'actionnement est suffisant pour augmenter l'intensité de la deuxième force "FpB" sur le deuxième piston 50B. Cette force "FpB" compense alors la force "Fr" de rappel élastique du deuxième segment 18B de freinage. Le deuxième piston 50B coulisse vers l'extérieur d'une course "j2", poussant le deuxième segment 18B de freinage vers la jupe 16 du tambour 14.

Sous l'effet de l'augmentation de l'effort d'actionnement, l'organe 80 élastique du câble 76 de frein est comprimé encore un peu plus. Lors de cette deuxième étape le câble 76 de frein est encore tiré, par exemple de 1,89 mm supplémentaires, tandis que le deuxième piston 50B coulisse, par exemple de 0,6 mm.

A la fin de cette deuxième étape, les faces 56A, 56B d'arrêt de chacun des pistons 50A, 50B sont écartées de 0,6 mm de leur face 48A, 48B de butée respective.

Puis, lors d'une dernière étape de blocage, les segments 18A, 18B sont entraînés par le tambour 14, comme représenté à la figure 5.

Lorsque le tambour 14 est soumis à un couple moteur qui tend à entraîner la roue en avant, ici dans un sens antihoraire en se reportant à la figure 1, le premier segment 18A de freinage est entraîné vers le corps 42 de l'élément 28 d'ancrage avec une force "Fc". Le premier segment 18A de freinage appuie donc sur le premier piston 50A jusqu'à ce que celui-ci soit en butée contre la première face 48A de butée associée.

Le levier 58 et la bielle 72 forment une entretoise coulissante par rapport au corps 42. Ainsi, la force "Fc" appliqué sur le premier segment 18A de freinage est transmise au deuxième piston 50B via le levier 58 et la bielle 72. Le levier 58 et la bielle 72 étant libres de coulisser solidairement avec les pistons 50A, 50B, le coulissement du premier piston 50A entraîne le coulissement du deuxième piston 50B via levier 58 et la bielle 72. L'effort "Ft" d'actionnement du câble 76 de frein demeure suffisante pour maintenir le levier 58 en position active malgré son déplacement.

Ainsi la force "Fc" appliquée par le couple au tambour 14 appuie donc très fortement le bas du deuxième segment 18B de freinage contre la jupe 16, augmentant ainsi le couple de freinage.

En se reportant à la figure 1, le deuxième segment 18B de freinage ainsi poussé contre la jupe 16, est soumis au couple d'entraînement du tambour 14. Ce couple tend à déplacer le deuxième segment 18B de freinage dans un sens antihoraire avec une grande force. Cette force est transmise par le deuxième segment 18B à la partie supérieure du premier segment 18A de freinage par l'intermédiaire de la biellette 38.

Ceci augmente encore l'adhérence du premier segment 18A de freinage au tambour 14, et augmente donc le couple de freinage.

Comme représenté à la figure 5, sous l'effet du couple d'entraînement du tambour 14, les segments 18A, 18B de freinage se déforment, entraînant une course supplémentaire du deuxième piston 50B, tandis que le premier piston 50A est déjà en butée contre le corps 42. Il s'ensuit une augmentation de l'écartement transversal entre les deux faces 32A, 32B d'appui. La face 56B d'arrêt du deuxième piston 50B est alors écartée par rapport à sa face 48B de butée d'une distance "j1+j2+jc".

Cette augmentation d'écartement entraîne un pivotement supplémentaire du levier 58. La course de traction du câble 76 de frein est ainsi augmentée sous l'effet du couple d'entraînement du tambour 14. Cette course supplémentaire est absorbée au moins en partie par la compression de l'organe 80 élastique.

Dans ce mode de fonctionnement "duo servo", les deux segments 18A, 18B de freinage sont comprimés.

Lorsque le tambour 14 est soumis à un couple d'entraînement en marche arrière, c'est à dire dans un sens horaire selon la figure 1, la dernière étape de blocage est similaire à la dernière étape de blocage en marche avant, si ce n'est que l'ensemble formé par les piston 50A, 50B, le levier 58 et la bielle 72 coulisse vers le premier segment 18A de freinage du fait de l'inversion du couple moteur. Ainsi, en fin d'étape de blocage, le premier piston 50A est écarté de la première face 48A de butée, tandis que le deuxième piston 50B est en butée contre la deuxième face 48B de butée. Cependant, le levier 58 étant coulissé vers la gauche, le câble 76 de frein ne subit pas un effet de tirage supplémentaire comme c'est le cas en marche avant.

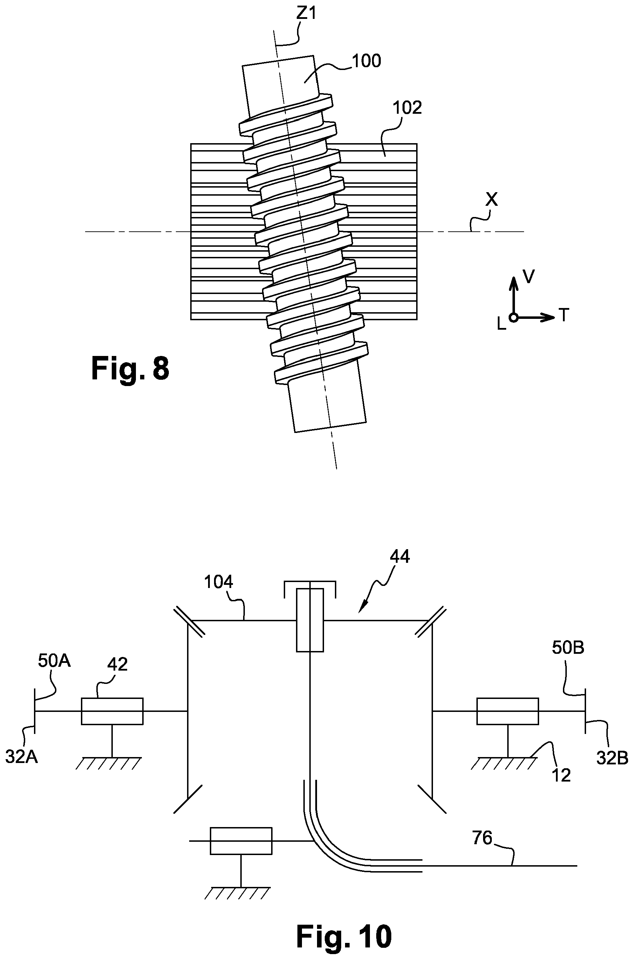

On a représenté aux figures 7 et 8 un deuxième mode de réalisation de l'invention dans lequel les moyens 44 d'écartement des deux pistons 50A, 50B ont été remplacés par un mécanisme vis-écrou qui permet de commander l'écartement transversal entre les deux faces 32A, 32B d'appui par rotation relative d'une vis 92 par rapport à un écrou 94.

Dans l'exemple représenté à la figure 7, l'écrou 94 est monté fixe en rotation par rapport au corps 42 et solidaire en coulissement avec le premier piston 50A. La vis 92 est montée rotative autour de l'axe "X" transversal de coulissement par rapport au corps 42 fixe de l'élément 28 d'ancrage. En outre la vis 92 est libre de coulisser dans le corps 42 selon son axe "X" de coulissement.

Une première extrémité 96 filetée de la vis 92 est reçue dans un taraudage complémentaire de l'écrou 94, tandis que l'autre extrémité 98 de la vis 92 est reçue dans un logement d'extrémité intérieure du deuxième piston 50B. La deuxième extrémité 98 de la vis 92 est reçue libre en rotation dans le logement, et elle est en appui transversal contre une face arrière du deuxième piston 50B.

Avantageusement, de manière similaire à l'exemple de la figure 6, un organe 80 élastique, formé par exemple par un empilement de rondelles de type Belleville, est interposé entre l'extrémité 98 libre de la vis 92 et la face arrière du deuxième piston 50B.

Ainsi, lorsque la vis 92 est tournée dans un premier sens, elle tend à écarter transversalement les pistons 50A, 50B l'un de l'autre en appuyant, d'une part, sur l'écrou 94 du premier piston 50A et, d'autre part, sur la face arrière du deuxième piston 50B.

Lorsque la vis 92 est tournée dans un deuxième sens opposée, les pistons 50A, 50B sont libres d'être poussés vers leur position d'ancrage par les segments 18A, 18B de freinage.

La rotation de la vis 92 est commandée par l'intermédiaire d'une vis 100 sans fin qui est munie d'une cannelure hélicoïdale. Cette vis 100 sans fin est par exemple entraînée en rotation par un moteur électrique commandé (non représenté) qui forme l'organe de commande des moyens 44 d'écartement.

La vis 100 sans fin est engrenée avec la denture périphérique d'un pignon 102 solidaire en rotation avec la vis 92. Le pignon 102 est ici agencé transversalement entre les deux pistons 50A, 50B. Le pignon 102 est fixé sur la vis 92.

Pour que le frein 10 à tambour puisse fonctionner en mode "duo servo", comme décrit dans le premier mode de réalisation, il faut que l'ensemble formé par les pistons 50A, 50B, la vis 92 et l'écrou 94 puisse coulisser librement dans le corps 42.

A cet effet, comme représenté à la figure 8, l'axe "Z1" de rotation de la vis 100 sans fin est agencé de manière à permettre un coulissement transversal du pignon 102 par rapport à la vis 100 sans fin tout en conservant maintenant leur engrènement relatif tout au long de la course transversale du pignon 102. Ainsi, le pignon 102 présente une denture droite qui s'étend selon la direction transversale, tandis que la cannelure hélicoïdale de la vis 100 sans fin est agencée tangentiellement à la direction transversale. L'axe "Z1" de la vis sans fin est donc légèrement incliné par rapport à une direction orthogonale à la direction transversale.

En variante, le pignon est monté solidaire en rotation avec la vis du mécanisme vis-écrou mais libre en coulissement sur ladite vis du mécanisme vis-écrou.

Le fonctionnement du frein 10 à tambour muni des moyens 44 d'écartement réalisés selon le deuxième mode de réalisation de l'invention est le même que pour le premier mode réalisation de l'invention.

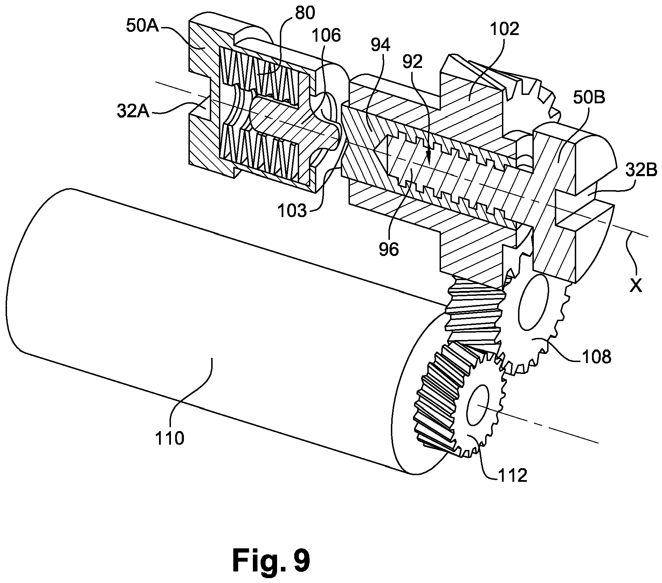

Selon un troisième mode de réalisation de l'invention qui est représenté à la figure 9, les moyens 44 d'écartement sont identiques aux moyens d'écartement du deuxième mode de réalisation. Cependant, le moteur électrique entraîne ici la rotation de l'écrou 94 ou de la vis 92 par l'intermédiaire d'au moins une roue dentée qui est engrenée avec la denture d'un pignon 102 porté par l'écrou 94 ou la vis 92, et non par l'intermédiaire d'une vis sans fin comme cela est le cas dans le deuxième mode de réalisation.

Dans l'exemple représenté à la figure 9, la vis 92 est montée fixe en rotation par rapport au corps fixe et solidaire en coulissement avec le deuxième piston 50B. L'écrou 94 est monté rotatif autour de l'axe "X" transversal de coulissement par rapport au corps fixe de l'élément d'ancrage. En outre l'écrou 94 est libre de coulisser dans le corps selon son axe "X" de coulissement.

Une première extrémité 96 filetée de la vis 92 est reçue dans un taraudage complémentaire de l'écrou 94, tandis que l'autre extrémité de la vis 92 comporte une tête formant le deuxième piston 50B. Une rainure formée dans la tête de la vis 92 est destinée à coopérer avec le segment 18B associé pour immobiliser la vis 92 en rotation.

Une face 103 d'extrémité transversale libre de l'écrou 94, qui est tournée vers le premier piston 50A, est destinée à venir solliciter transversalement un coulisseau 106 qui est reçu coulissant transversalement dans un logement du premier piston 50A.

Un organe 80 élastique, formé par exemple par un empilement transversal de rondelles de type Belleville, est interposé transversalement entre le coulisseau 106 et le premier piston 50A.

Ainsi, lorsque l'écrou 94 est tourné dans un premier sens, il tend à écarter transversalement les pistons 50A, 50B l'un de l'autre en appuyant, d'une part, sur la vis 92 du deuxième piston 50B et, d'autre part, sur le premier piston 50A via le coulisseau 106 et l'organe 80 élastique.

Lorsque l'écrou 94 est tourné dans un deuxième sens opposé, les pistons 50A, 50B sont libres d'être poussés vers leur position d'ancrage par les segments 18A, 18B de freinage.

La rotation de l'écrou 94 est commandée par l'intermédiaire d'au moins une roue 108 dentée d'axe qui est engrenée directement avec la denture d'un pignon 102 porté par l'écrou 94. La roue 108 dentée est ici montée rotative autour d'un axe transversal parallèle à l'axe "X" de coulissement des pistons 50A, 50B.

Cette roue 108 dentée est par exemple entraînée en rotation par un moteur 110 électrique commandé qui forme l'organe de commande des moyens 44 d'écartement par l'intermédiaire d'un pignon 112 d'entraînement qui est monté rotatif autour d'un axe transversal de rotation du moteur 110.

La roue 108 dentée présente ici une denture hélicoïdale orientée de manière que l'effort transmis par la roue 108 dentée présente une composante axiale s'opposant à l'effort exercé par le deuxième segment 18B sur le deuxième piston 50B.

Dans ce troisième mode de réalisation, le pignon 102 est coaxial à l'écrou 94 et il est porté solidaire en rotation avec l'écrou 94. En outre, l'écrou 94 est susceptible de coulisser par rapport au pignon 102 selon l'axe "X" de coulissement afin que le pignon 102 demeure fixe par rapport à la roue dentée 108 même en cas de coulissement du deuxième piston 50B. Ainsi, l'ensemble formé par les deux pistons 50A, 50B et l'écrou 94 forme une entretoise coulissante en mode duo-servo.

Par exemple, le pignon 102 est monté sur l'écrou 94 par l'intermédiaire de cannelures axiales. Ainsi, le pignon 102 est fixe axialement tandis que l'écrou 94 peut coulisser dans un alésage cannelé du pignon 102. Le pignon 102 transmet néanmoins un couple autour de l'axe "X" de coulissement par l'intermédiaire des cannelures.

En variante, l'arrêt en rotation du pignon par rapport à l'écrou, tout en permettant leur coulissement relatif, peut être effectué par tout autre moyen connu, par exemple par une clavette, une goupille, etc.

Selon un quatrième mode de réalisation représenté à la figure 10, les moyens 44 d'écartement comportent au moins un coin 104 qui est monté coulissant orthogonalement à la direction transversale entre une position rétractée dans laquelle les deux faces 32A, 32B d'appui occupent leur position d'ancrage, et une position actionnée dans laquelle les deux faces 32A, 32B d'appui occupent leur position coulissante et vers laquelle il est tiré par un effort d'actionnement.

Le coin 104 est intercalé transversalement entre les deux faces 32A, 32B d'appui. Le coin 104 est en outre susceptible de coulisser transversalement de manière solidaire avec les pistons 50A, 50B.

Dans l'exemple représenté à la figure 10, le coin 104 est actionné par un câble 76 de frein.

En variante non représentée de ce troisième mode de réalisation de l'invention, les moyens d'écartement comportent deux coins opposés qui sont susceptibles d'être serrés l'un vers l'autre de manière à écarter transversalement les pistons.

Le fonctionnement du frein 10 à tambour muni de tels moyens d'écartement est analogue à ce qui a été décrit pour le premier mode de réalisation de l'invention.

Le frein 10 à tambour réalisé selon l'un quelconque des modes de réalisation de l'invention est ainsi susceptible de fonctionner selon deux modes de fonctionnement. Le mode "simplex" permet un freinage progressif en étant commandé uniquement par le cylindre de roue, tandis que le mode "duo servo" permet un blocage rapide et puissant des roues du véhicule en étant commandé uniquement par les moyens d'écartement.

## Revendications

1. Frein (10) à tambour de véhicule automobile qui comporte :
- un plateau (12) transversal fixe ;
- un tambour (14) qui est monté à rotation par rapport au plateau (12) et qui est muni d'une jupe (16) périphérique de friction ;
- deux segments (18A, 18B) opposés de freinage qui comportent des premières extrémités (22) transversalement en vis-à-vis et des deuxièmes extrémités (24) opposées transversalement en vis-à-vis ;
- un élément (28) d'ancrage qui est interposé transversalement entre les deuxièmes extrémités (24) des segments (18A, 18B) de freinage de manière que chaque deuxième extrémité (24) soit contrainte élastiquement en appui transversal pivotant contre une face (32A, 32B) associée d'appui de l'élément (28) d'ancrage ;
- un cylindre (34) de roue qui, dans un premier mode de fonctionnement dit "simplex" du frein (10) à tambour, est apte à écarter transversalement les deux premières extrémités (22) adjacentes des segments (18A, 18B) de freinage, faisant pivoter les segments (18A, 18B) de freinage autour de leur face (32A, 32B) d'appui fixe par rapport au plateau (12), pour appliquer une face (20) de friction de chaque segment (18A, 18B) de freinage contre la jupe (16) de friction ; l'élément (28) d'ancrage comportant:
- un corps (42) fixe par rapport au plateau (12) ;
- deux pistons (50A, 50B) dont chacun porte une face (32A, 32B) d'appui associée et qui sont montés coulissant transversalement dans le corps (42), **caractérisé en ce que** l'élément (28) d'ancrage comporte:
- des moyens (44) commandés d'écartement transversal des faces (32A, 32B) d'appui entre une position d'ancrage dans laquelle les pistons (50A, 50B) sont serrés simultanément contre une face (48A, 48B) de butée associée du corps (42) par les segments (18A, 18B) associés pour permettre le fonctionnement en mode "simplex" du frein (10) à tambour, le corps (42) formant entretoise fixe, et une position coulissante dans laquelle les faces (32A, 32B) d'appui sont écartées l'une de l'autre, les moyens (44) d'écartement agissant comme une entretoise coulissante pour permettre le coulissement solidaire et libre des pistons (50A, 50B) d'appui par rapport au corps (42) fixe lors d'un fonctionnement en mode dit "duo servo" du frein (10) à tambour.

2. Frein (10) à tambour selon la revendication précédente, **caractérisé en ce que** l'écartement des deux faces (32A, 32B) d'appui en position coulissante est suffisant pour permettre le serrage des deux segments (18A, 18B) de freinage contre la jupe (16) de friction.

3. Frein (10) à tambour selon l'une quelconque des revendications précédentes, **caractérisé en ce que** les moyens d'écartement comportent un levier (58) qui comporte une première extrémité (60) d'actionnement et une deuxième extrémité (62) d'articulation, le levier (58) prenant appui transversalement par un tronçon (66) intermédiaire sur un pivot (68) qui est solidaire en coulissement avec le premier piston (50A) de l'élément (28) d'ancrage, la deuxième extrémité (62) du levier (58) étant articulée avec une première extrémité (70) d'une bielle (72), la deuxième extrémité (74) de la bielle (72) étant susceptible de solliciter transversalement le deuxième piston (50B), le levier (58) étant commandé en pivotement entre :
- une position inactive dans laquelle la bielle (72) est inclinée par rapport à la direction transversale de manière que les deux faces (32A, 32B) d'appui occupent leur position d'ancrage ;
- une position active dans laquelle le levier (58) prend transversalement appui sur le premier piston (50A) pour solliciter le deuxième piston (50B) en pivotant la bielle (72) vers la direction transversale afin d'écarter les deux faces (32A, 32B) d'appui vers leur position coulissante.

4. Frein (10) à tambour selon la revendication précédente, **caractérisé en ce qu'**en position coulissante des faces (32A, 32B) d'appui, l'axe (Z) principal de la bielle (72) est orienté sensiblement transversalement.

5. Frein (10) à tambour selon l'une quelconque des revendications 3 ou 4, **caractérisé en ce que** l'extrémité (60) d'actionnement du levier (58) est susceptible d'être tirée vers sa position active par l'intermédiaire d'un câble (76) de frein comportant une extrémité (78) d'accrochage sur le levier (58) et une extrémité de traction sur laquelle une force (Ft) d'actionnement est appliquée.

6. Frein (10) à tambour selon l'une quelconque des revendications 1 à 2, **caractérisé en ce que** les moyens (44) d'écartement comportent un mécanisme vis-écrou (92, 94) qui permet de commander l'écartement transversal entre les deux faces (32A, 32B) d'appui par la rotation relative de la vis (92) par rapport à l'écrou (94) qui exerce une force d'actionnement sur le deuxième piston (50B).

7. Frein (10) à tambour selon la revendication précédente, **caractérisé en ce que** la rotation de l'écrou (94) ou de la vis (92) est commandée par un moteur électrique.

8. Frein (10) à tambour selon la revendication précédente, **caractérisé en ce que** la rotation de l'écrou (94) ou de la vis (92) est commandée par l'intermédiaire d'une vis (100) sans fin qui est munie d'une cannelure hélicoïdale et qui est entraînée par le moteur électrique, la vis (100) sans fin étant engrenée avec la denture d'un pignon (102) solidaire en rotation avec l'écrou (94) ou la vis (92), l'axe (Z1) de rotation de la vis (100) sans fin étant agencé de manière à permettre un coulissement transversal du pignon (102) par rapport à la vis (100) sans fin tout en maintenant leur engrènement relatif.

9. Frein (10) à tambour selon la revendication 7, **caractérisé en ce que** le moteur électrique entraîne la rotation de l'écrou (94) ou de la vis (92) par l'intermédiaire d'au moins une roue dentée qui est engrenée avec la denture d'un pignon (102) porté par l'écrou (94) ou la vis (92).

10. Frein (10) à tambour selon l'une quelconque des revendications 1 à 2, **caractérisé en ce que** les moyens (44) d'écartement comportent un coin (104) qui est monté coulissant orthogonalement à la direction transversale entre une position rétractée dans laquelle les deux faces (32A, 32B) d'appui occupent leur position d'ancrage, et une position actionnée dans laquelle les deux faces (32A, 32B) d'appui occupent leur position coulissante et vers laquelle il est tiré par un effort d'actionnement, le coin (104) étant intercalé transversalement entre les deux pistons (50A, 50B) et le coin (104) étant monté coulissant transversalement de manière solidaire avec les faces (32A, 32B) d'appui.

11. Frein (10) à tambour selon la revendication précédente, **caractérisé en ce qu'**il comporte un organe (80) élastique de raideur déterminée qui est interposé dans la chaîne de transmission de la force (Ft) d'actionnement jusqu'à l'un des deux pistons (50A, 50B).

12. Frein (10) à tambour selon la revendication précédente prise en combinaison avec la revendication 5, **caractérisé en ce que** l'organe (80) élastique est interposé entre deux brins (82, 84) distincts du câble (76) de frein.

13. Frein (10) à tambour selon la revendication 11 prise en combinaison avec la revendication 5, **caractérisé en ce que** l'organe (80) élastique est interposé entre la portion (66) intermédiaire du levier (58) et l'un des deux pistons (50A, 50B).

14. Frein (10) à tambour selon la revendication 11 prise en combinaison avec l'une quelconque des revendications 6 à 9, **caractérisé en ce que** l'organe (80) élastique est interposé entre :
- la vis (92) ou l'écrou (94), et
- le premier piston (50A) ou le deuxième piston (50B).

## Patentansprüche

1. Trommelbremse (10) für ein Automobilfahrzeug, umfassend:
- eine feste Transversalplatte (12);
- eine Trommel (14), die drehbar bezüglich der Platte (12) montiert ist und die mit einem Umfangsreibungsmantel (16) ausgestattet ist;
- zwei entgegengesetzte Bremssegmente (18A, 18B), die transversal erste Enden (22) einander gegenüberliegend sowie zweite transversal entgegengesetzte Enden (24) einander gegenüberliegend umfassen;
- ein Verankerungselement (28), das transversal zwischen den zweiten Enden (24) der Bremssegmente (18A, 18B) derart eingefügt ist, dass jedes zweite Ende (24) elastisch in transversale Schwenkanlage gegen eine zugeordnete Anlagefläche (32A, 32B) des Verankerungselements (28) vorgespannt ist;
- einen Radzylinder (34), der in einem ersten sogenannten "Simplex"-Funktionsmodus der Trommelbremse (10) dazu ausgelegt ist, transversal die zwei ersten benachbarten Enden (22) der Bremssegmente (18A, 18B) zu beabstanden und die Bremssegmente (18A, 18B) um ihre feste Anlagefläche (32A, 32B) bezüglich der Platte (12) zu schwenken, um eine Reibungsfläche (20) jedes Bremssegments (18A, 18B) gegen den Reibungsmantel (16) zu drücken;
das Verankerungselement (28) umfasst:
- einen Körper (42), der bezüglich der Platte (12) fest ist;
- zwei Kolben (50A, 50B), von denen jeder eine zugeordnete Anlagefläche (32A, 32B) trägt, und die transversal verschiebbar in dem Körper (42) montiert sind,
**dadurch gekennzeichnet, dass** das Verankerungselement (28) umfasst:
- gesteuerte Mittel (44) zur transversalen Beabstandung der Anlageflächen (32A, 32B) zwischen einer Verankerungsposition, in der die Kolben (50A, 50B) gleichzeitig gegen eine zugeordnete Anschlagsfläche (48A, 48B) des Körpers (42) durch die zugeordneten Segmente (18A, 18B) gespannt sind, um die Funktion im "Simplex"-Modus der Trommelbremse (10) zu ermöglichen, wobei der Körper (42) einen festen Abstandshalter bildet, und einer verschiebbaren Position, in der die Anlageflächen (32A, 32B) voneinander beabstandet sind, wobei die Beabstandungsmittel (44) als ein verschiebbarer Abstandshalter wirken, um die gemeinsame und freie Verschiebung der Anlagekolben (50A, 50B) bezüglich des festen Körpers (42) während einer Funktion der Trommelbremse (10) im sogenannten "Duoservo"-Modus zu erlauben.

2. Trommelbremse (10) nach dem vorhergehenden Anspruch, **dadurch gekennzeichnet, dass** die Beabstandung der zwei Anlageflächen (32A, 32B) in der verschiebbaren Position ausreichend ist, um das Spannen der zwei Bremssegmente (18A, 18B) gegen den Reibungsmantel (16) zu ermöglichen.

3. Trommelbremse (10) nach einem der vorhergehenden Ansprüche, **dadurch gekennzeichnet, dass** die Beabstandungsmittel einen Hebel (58) umfassen, der ein erstes Betätigungsende (60) und ein zweites Gelenkende (62) umfasst, wobei der Hebel (58) transversal durch einen Zwischenabschnitt (66) in Anlage an einem Drehpunkt (68) gelangt, der verschiebbar mit dem ersten Kolben (50A) des Verankerungselements (28) verbunden ist, wobei das zweite Ende (62) des Hebels (58) an einem ersten Ende (70) einer Stange (72) angelenkt ist, wobei das zweite Ende (74) der Stange (72) dazu ausgelegt ist, transversal den zweiten Kolben (50B) zu beaufschlagen, wobei der Hebel (58) zur Schwenkung gesteuert wird zwischen:
- einer inaktiven Position, in der die Stange (72) bezüglich der transversalen Richtung derart geneigt ist, dass die zwei Anlageflächen (32A, 32B) ihre Verankerungsposition einnehmen;
- einer aktiven Position, in der der Hebel (58) transversal in Anlage an dem ersten Kolben (50A) ist, um den zweiten Kolben (50B) unter Verschwenkung der Stange (72) in die transversale Richtung zu beaufschlagen, um die zwei Anlageflächen (32A, 32B) zu ihrer Schiebeposition zu beabstanden.

4. Trommelbremse (10) nach dem vorhergehenden Anspruch, **dadurch gekennzeichnet, dass** in der Schiebeposition der Anlageflächen (32A, 32B) die Hauptachse (Z) der Stange (72) im Wesentlichen transversal orientiert ist.

5. Trommelbremse (10) nach einem der Ansprüche 3 oder 4, **dadurch gekennzeichnet, dass** das Betätigungsende (60) des Hebels (58) dazu ausgelegt ist, in seine aktive Position gezogen zu werden mittels eines Bremskabels (76), das ein Ende (78) zur Ankopplung an dem Hebel (58) und ein Zugende umfasst, auf welches eine Betätigungskraft (Ft) ausgeübt wird.

6. Trommelbremse (10) nach einem der Ansprüche 1 bis 2, **dadurch gekennzeichnet, dass** die Beabstandungsmittel (44) einen Schraube-Mutter-Mechanismus (92, 94) umfassen, der es erlaubt, die transversale Beabstandung zwischen den zwei Anlageflächen (32A, 32B) durch die Relativdrehung der Schraube (92) bezüglich der Mutter (94) zu steuern, die eine Betätigungskraft auf den zweiten Kolben (50B) ausübt.

7. Trommelbremse (10) nach dem vorhergehenden Anspruch, **dadurch gekennzeichnet, dass** die Drehung der Mutter (94) oder der Schraube (92) durch einen Elektromotor gesteuert wird.

8. Trommelbremse (10) nach dem vorhergehenden Anspruch, **dadurch gekennzeichnet, dass** die Drehung der Mutter (94) oder der Schraube (92) mittels einer Endlosschraube (100) gesteuert wird, die mit einer helixförmigen Rille ausgestattet ist, und die durch den Elektromotor angetrieben wird, wobei die Endlosschraube (100) in Eingriff mit den Zähnen eines Ritzels (102) ist, das mit der Mutter (94) oder der Schraube (92) drehverbunden ist, wobei die Drehachse (Z1) der Endlosschraube (100) derart gestaltet ist, dass eine Transversalverschiebung des Ritzels (102) bezüglich der Endlosschraube (100) unter Beibehaltung ihres relativen Zahneingriffs ermöglicht wird.

9. Trommelbremse (10) nach Anspruch 7, **dadurch gekennzeichnet, dass** der Elektromotor die Drehung der Mutter (94) oder der Schraube (92) mittels wenigstens eines Zahnrads antreibt, das in Eingriff mit den Zähnen eines Ritzels (102) ist, welches von der Mutter (94) oder der Schraube (92) getragen wird.

10. Trommelbremse (10) nach einem der Ansprüche 1 bis 2, **dadurch gekennzeichnet, dass** die Beabstandungsmittel (44) ein Winkelstück (104) umfassen, das orthogonal zur Transversalrichtung verschiebbar zwischen einer zurückgezogenen Position, in der die zwei Anlageflächen (32A, 32B) ihre Verankerungsposition einnehmen, und einer betätigten Position montiert ist, in der die zwei Anlageflächen (32A, 32B) ihre Schiebeposition einnehmen und zu der es durch eine Betätigungskraft gezogen wird, wobei das Winkelstück (104) transversal zwischen den zwei Kolben (50A, 50B) eingefügt ist, und das Winkelstück (104) transversal gemeinsam mit den Anlageflächen (32A, 32B) verschiebbar montiert ist.

11. Trommelbremse (10) nach dem vorhergehenden Anspruch, **dadurch gekennzeichnet, dass** sie ein elastisches Organ (80) mit vorbestimmter Festigkeit umfasst, das in der Kette zur Übertragung der Betätigungskraft (Ft) bis zu einem der zwei Kolben (50A, 50B) eingefügt ist.

12. Trommelbremse (10) nach dem vorhergehenden Anspruch in Kombination mit Anspruch 5, **dadurch gekennzeichnet, dass** das elastische Organ (80) zwischen zwei verschiedenen Drähten (82, 84) des Bremskabels (76) eingefügt ist.

13. Trommelbremse (10) nach Anspruch 11 in Kombination mit Anspruch 5, **dadurch gekennzeichnet, dass** das elastische Organ (80) zwischen dem Zwischenbereich (66) des Hebels (58) und einem der zwei Kolben (50A, 50B) eingefügt ist.

14. Trommelbremse (10) nach Anspruch 11 in Kombination mit einem der Ansprüche 6 bis 9, **dadurch gekennzeichnet, dass** das elastische Organ (80) eingefügt ist zwischen:
- der Schraube (92) oder der Mutter (94), und
- dem ersten Kolben (50A) oder dem zweiten Kolben (50B)

## Claims

1. Motor vehicle drum brake (10) including:
- a fixed transversal plate (12);
- a drum (14) rotatably mounted with respect to the plate (12) and equipped with a peripheral friction skirt (16);
- two opposite braking segments (18A, 18B) including first transversally facing ends (22) and second transversally facing opposite ends (24);
- an anchoring element (28) inserted transversally between the second ends (24) of the braking segments (18A, 18B) such that each second end (24) is elastically forced to pivotably transversally bear against an associated bearing surface (32A, 32B) of the anchoring element (28);
- a wheel cylinder (34) which, in a first so-called "simplex" operating mode of the drum brake (10), is suitable for transversally separating the two adjacent first ends (22) of the braking segments (18A, 18B), pivoting the braking segments (18A, 18B) about the fixed bearing surface (32A, 32B) thereof with respect to the plate (12), to apply a friction surface (20) surface of each braking segment (18A, 18B) against the friction skirt (16);
the anchoring element (28) including:
- a fixed body (42) with respect to the plate (12);
- two pistons (50A, 50B) each carrying an associated bearing surface (32A, 32B) and which are slidably mounted transversally in the body (42),
- **characterised in that** the anchoring element (28) comprises:
- controlled means (44) for transversal separation of the bearing surfaces (32A, 32B) between an anchoring position wherein the pistons (50A, 50B) are clamped simultaneously against an associated abutment surface (48A, 48B) of the body (42) by the associated segments (18A, 18B) to enable operation in "simplex" mode of the drum brake (10), the body (42) acting as a fixed brace, and a sliding position wherein the bearing surfaces (32A, 32B) are separated from one another, the separating means (44) acting as a sliding brace to enable rigidly connected and free sliding of the bearing pistons (50A, 50B) with respect to the fixed body (42) during operation in so-called "servo-dual" mode of the drum brake (10).

2. Drum brake (10) according to the preceding claim, **characterised in that** the separation of the two bearing surfaces (32A, 32B) in the sliding position is sufficient to enable the clamping of the two braking segments (18A, 18B) against the friction skirt (16).

3. Drum brake (10) according to any one of the preceding claims, **characterised in that** the separation means include a lever (58) including a first actuation end (60) and a second hinge end (62), the lever (58) bearing transversally by an intermediate section (66) on a pivot (68) which is slidably rigidly connected with the first piston (50A) of the anchoring element (28), the second end (62) of the lever (58) being hinged with a first end (70) of a connecting rod (72), the second end (74) of the connecting rod (72) being suitable for actuating the second piston (50B) transversally, the lever (58) being pivotably controlled between:
- an idle position wherein the connecting rod (72) is inclined with respect to the transversal direction such that the two bearing surfaces (32A, 32B) occupy the anchoring position thereof;
- an active position wherein the lever (58) bears transversally on the first piston (50A) to actuate the second piston (50B) by pivoting the connecting rod (72) towards the transversal direction in order to separate the two bearing surfaces (32A, 32B) to the sliding position thereof.

4. Drum brake (10) according to the preceding claim, **characterised in that** in the sliding position of the bearing surfaces (32A, 32B), the main axis (Z) of the connecting rod (72) is oriented substantially transversally.

5. Drum brake (10) according to any one of claims 3 or 4, **characterised in that** the actuation end (60) of the lever (58) is suitable for being pulled to the active position thereof by means of a brake cable (76) including an end (78) for fastening on the lever (58) and a pulling end wherein an actuation force (Ft) is applied.

6. Drum brake (10) according to any one of claims 1 to 2, **characterised in that** the separation means (44) include a screw-nut mechanism (92, 94) suitable for controlling the transversal separation between the two bearing surfaces (32A, 32B) by the relative rotation of the screw (92) with respect to the nut (94) which applies an actuation force on the second piston (50B).

7. Drum brake (10) according to the preceding claim, **characterised in that** the rotation of the nut (94) or the screw (92) is controlled by an electric motor.

8. Drum brake (10) according to the preceding claim, **characterised in that** the rotation of the nut (94) or the screw (92) is controlled by means of an endless screw (100) equipped with a helicoidal groove and driven by the electric motor, the endless screw (100) being engaged with the teeth of a pinion (102) rigidly connected in rotation with the nut (94) or the screw (92), the axis (Z1) of rotation of the endless screw (100) being arranged so as to enable transversal sliding of the pinion (102) with respect to the endless screw (100) while maintaining the relative engagement thereof.

9. Drum brake (10) according to claim 7, **characterised in that** the electric motor rotates the nut (94) or the screw (92) by means of at least one cogwheel engaged with the teeth of a pinion (102) borne by the nut (94) or the screw (92).

10. Drum brake (10) according to any one of claims 1 to 2, **characterised in that** the separation means (44) include a wedge (104) which is slidably mounted orthogonally to the transversal direction between a retracted position wherein the two bearing surfaces (32A, 32B) occupy the anchoring position thereof, and an actuated position wherein the two bearing surfaces (32A, 32B) occupy the sliding position thereof and towards which it is pulled by an actuation force, the wedge (104) being inserted transversally between the two pistons (50A, 50B) and the wedge (104) being slidably mounted transversally in a rigidly connected manner with the bearing surfaces (32A, 32B).

11. Drum brake (10) according to the preceding claim, **characterised in that** it includes an elastic member (80) of defined stiffness which is inserted in the actuation force (Ft) transmission chain to one of the two pistons (50A, 50B).

12. Drum brake (10) according to the preceding claim taken in combination with claim 5, **characterised in that** the elastic member (80) is inserted between two separate strands (82, 84) of the brake cable (76).

13. Drum brake (10) according to claim 11 taken in combination with claim 5, **characterised in that** the elastic member (80) is inserted between the intermediate portion (66) of the lever (58) and one of the two pistons (50A, 50B).

14. Drum brake (10) according to claim 11 taken in combination with any one of claims 6 to 9, **characterised in that** the elastic member (80) is inserted between:
- the screw (92) or the nut (94), and
- the first piston (50A) or the second piston (50B).
